(19) Europäisches Patentamt
European Patent Office
Office européen des brevets

(11) Veröffentlichungsnummer: **0 005 789**
**B2**

# (12) NEUE EUROPÄISCHE PATENTSCHRIFT

(45) Veröffentlichungstag der neuen Patentschrift: **02.04.86**

(51) Int. Cl.⁴: **C 01 B 33/28** // C11D7/14

(21) Anmeldenummer: **79101556.3**

(22) Anmeldetag: **22.05.79**

(54) **Lagerstabile und fliessfähige Silikatsuspensionen, welche Dicarbonsäuren als Fliessfähigkeitsverbesserer und Stabilisierhilfsmittel enthalten.**

(30) Priorität: **03.06.78 DE 2824443**

(43) Veröffentlichungstag der Anmeldung:
**12.12.79 Patentblatt 79/25**

(45) Bekanntmachung des Hinweises auf die Patenterteilung:
**15.07.81 Patentblatt 81/28**

(45) Bekanntmachung des Hinweises auf die Entscheidung über den Einspruch:
**02.04.86 Patentblatt 86/14**

(84) Benannte Vertragsstaaten:
**AT BE CH DE FR IT NL SE**

(56) Entgegenhaltungen:
**DE - A - 2 527 388**
**DE - A - 2 615 698**
**DE - B - 2 412 837**
**DE - B - 2 412 838**
**US - A - 4 018 622**

**Technisches Merkblatt, "Sokalan DCS"m BASF, Seite 1 bis 3, Mai 1976**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Diessel, Paul, Franz-Schnabel-Strasse 4, D-6800 Mannheim 51 (DE)**
Erfinder: **Perner, Johannes, Dr., Kiesstrasse 19 b, D-6730 Neustadt 1 (DE)**
Erfinder: **Leutner, Bernd, Dr., Taunusstrasse 17, D-6710 Frankenthal 4 (DE)**
Erfinder: **Schlimper, Hans-Ulrich, Dr., Im Erlich 74, D-6720 Speyer (DE)**

EP 0 005 789 B2

**Beschreibung**

Die Erfindung betrifft wässrige Suspensionen von Natriumaluminiumsilikaten (Zeolithen), die durch Zusatz aliphatischer Dicarbonsäuren in eine lagerstabile, fliessfähige und pumpbare Form gebracht worden sind.

Natriumaluminiumsilikate dieser Art werden, wie z.B. aus den DE-A-24 12 836, 24 12 837 und 24 12 838 bekannt ist, als Phosphatsubstitute in Waschmitteln beschrieben.

Das Problem besteht darin, dass bei der Konfektionierung solcher Waschmittel diese Silikate in Form von relativ hochkonzentrierten wässrigen Suspensionen («slurries») gehandhabt werden müssen, die dann nach den üblichen Verfahren in trockene Pulver überführt werden. Nun hat es sich herausgestellt, dass beim Lagern und Umpumpen dieser «slurries» häufig zu starke Sedimentierung der feinkörnigen Silikate eintrat, was eine Herstellung hinsichtlich der Aktivkomponenten typkonstanter Produkte stark erschwert. Nach der DE-A-26 15 698 versuchte man des Problems dadurch Herr zu werden, dass man einer wässrigen Zeolith-Suspension ein Dispergiermittel u.a. aus der Klasse der polymeren Carbonsäuren wie Natriumpolyacrylat und ein nichttensidisches phosphorfreies niedermolekulares anorganisches oder organisches Salz als Stabilisierhilfsmittel zusetzte. Als solche Salze werden u.a. Natriumcitrat und Salze, die zwei Carboxylgruppen enthalten, genannt.

Der Nachteil liegt hier in der Notwendigkeit, ein Mehrkomponentensystem einsetzen zu müssen.

Es war das Ziel der vorliegenden Erfindung, einen Zusatz zu finden, der Silikat-Suspensionen bewirkt, die mindestens 24 Stunden stabil und ohne Absetzen der Feststoffe fliessfähig und pumpbar sind.

Ein weiteres Ziel bestand darin, dafür einen möglichst einfach erhältlichen und wohlfeilen Stoff aufzufinden, der zudem mit den waschaktiven Substanzen verträglich ist und auch bei geringer Dosierung dem Ziel genügt.

Diese Ziele werden mit Suspensionen erreicht, bestehend aus – bezogen auf das Gewicht der Suspension – 20 bis 60% an feinverteilten wasserunlöslichen Natriumaluminiumsilikaten, zusätzlich als Stabilisierhilfsmittel und Fliessfähigkeitsverbesserer organischen Säuren und/oder deren Salze und Wasser, dadurch gekennzeichnet, dass die organischen Säuren bzw. deren Salze in den Suspensionen in einer Menge von 0,5 bis 15% – bezogen auf das Gewicht der Suspension – zugegen sind und ausschliesslich aus mindestens einer hydroxylgruppenfreien gesättigten oder ungesättigten aliphatischen Dicarbonsäure mit 3 bis 10 C-Atomen oder ihren Alkalisalzen bestehen.

Das Ergebnis musste überraschen, da nach dem nächstliegenden Stand der Technik zusätzlich noch z.B. ein Polyacrylat zwingend als Dispergiermittel vorgeschrieben wird, und das organische Salz nur in Verbindung mit diesem Polyacrylat wirkt.

Die erfindungsgemässen Suspensionen enthalten in der Regel 20 bis 60 Gew.% – bezogen auf die Suspension –, vorzugsweise 40 bis ca. 50 Gew.% eines feinverteilten, wasserunlöslichen Natriumaluminiumsilikats, das vorzugsweise der allgemeinen Formel

$$(Na_2O)_x \cdot Al_2O_3 \cdot (SiO_2)_y \cdot zH_2O$$

gehorcht, in der x für 0,7 bis 1,5 y für 0,8 bis 6 und z für 3,0 bis 7,0 stehen.

Diesen Suspensionen gibt man im erfindungsgemässen Sinne mindestens eine aliphatisch gesättigte oder ungesättigte hydroxylgruppenfreie Dicarbonsäure oder ihr Alkalisalz zu. Es können auch Gemische zugesetzt werden, wie anschliessend erläutert wird. Die Dicarbonsäuren enthalten 3 bis 10, vorzugsweise 4 bis 6 C-Atome.

Dicarbonsäuren bzw. ihre Alkalisalze, die für die erfindungsgemässen Suspensionen in Betracht kommen, sind beispielsweise Malonsäure, Bernsteinsäure, Glutarsäure, Adipinsäure, Maleinsäure, Fumarsäure, ω,ω'-Pentan-, Hexan-, Heptan- und Octandicarbonsäure.

Als besonders günstig haben sich Bernsteinsäure, Glutarsäure und Adipinsäure erwiesen.

Auch Gemische der einzelnen Säuren sind wirksam, und hier sei vor allem das Gemisch aus Bernsteinsäure, Glutarsäure und Adipinsäure genannt. Die der Einfachheit halber Säuren genannten Dicarbonsäuren bzw. der Alkalisalze werden den Suspensionen in Konzentrationen von – bezogen auf das Gewicht der Suspension – in ca. 0,5 bis 15%, vorzugsweise 2,5 bis 10%, zugesetzt. Die Wirkung erstreckt sich optimal über einen pH-Bereich von ca. 3 bis 14.

Die erfindungsgemässen Suspensionen sind überwiegend stabil und pumpbar. Sie sind daher für die Herstellung von Waschmitteln sehr gut geeignet. Die Suspensionen enthalten ansonsten keine weiteren Bestandteile; sie werden erst bei der Konfektionierung der Waschmittel mit den übrigen Waschmittelbestandteilen vereinigt.

Die nun folgenden Beispiele erläutern die Erfindung:

A Versuchsbedingungen

Es wurde ein als «Zeolith A» bekanntes Natriumaluminiumsilikat mit einer mittleren Teilchengrösse von 3 bis 6 μ verwendet, das der ungefähren theoretischen Formel

$$Na_2O \cdot Al_2O_3 \cdot (SiO_2)_2 \cdot 4{,}5\, H_2O$$

entsprach, und das in 1%iger Suspension einen pH-Wert von ca. 11 aufwies.

Der Zeolith wurde als 25 und 50 gew.%ige Suspension geprüft.

Die Suspensionen wurden 5 Minuten bei 100 U/min gerührt und in 100 ml Standzylindern, die jeweils 100 ml der zu testenden Suspension enthielten, sich selbst überlassen. Dann wurden in mehreren Zeitabständen die Anteile an klarem Wasser im Standzylinder gemessen. Je grösser der Anteil an klarem Wasser (im Standzylinder oben) war, desto instabiler war die Suspension.

Die Ergebnisse sind aus der folgenden Tabelle 1 ersichtlich:

Tabelle 1

| Stabilisator | Gew.% Zusatz | Viskosität mPas | 24 Std. | 48 Std. | 7 Tage |
|---|---|---|---|---|---|
| 50 Gew.% Zeolith A<br>50 Gew.% Wasser | | | | | |
| ohne Zusatz | – | 18 | 37/63 | 37/63 | 37/63 |
| Malonsäure | 5 | 785 | 3/97 | 4/96 | 4/96 |
| Bernsteinsäure | 5 | 308 | 3/97 | 5/95 | 5/95 |
| Maleinsäure | 5 | 15 | 9/91 | 8/92 | 7/91 |
| Bernstein-Glutar-Adipinsäuregemisch | 5 | 316 | 0/100 | 3/97 | 3/97 |
| 25 Gew.% Zeolith A<br>75 Gew.% Wasser | | | | | |
| ohne Zusatz | – | 6 | 72/28 | 72/28 | 72/28 |
| Bernstein-Glutar-Adipinsäuregemisch | 6 | 435 | 4/96 | 4/96 | 4/96 |
| Bernstein-Glutar-Adipinsäuregemisch | 5 | 38 | 12/88 | 12/88 | 12/88 |

Die vordere Zahl gibt den klaren (silikatfreien) oberen Teil der Flüssigkeitssäule, die hintere den silkathaltigen unteren Teil in Vol.% wieder.

In einem weiteren Versuch wurden die Suspensionen bei verschiedenen pH-Werten geprüft. Eingestellt wurde mit Schwefelsäure.

Die Ergebnisse gehen aus der Tabelle 2 hervor:

Tabelle 2

| Probe<br>Zeolith | 25 Gew.% Zeolith/75 Gew.% Wasser<br>pH | Lagerstabilität<br>1 Tag | <br>1 Woche |
|---|---|---|---|
| a | 10,9 | 57/42 | 58/42 |
| b | 10 | 49/51 | 49/51 |
| c | 9 | 40/60 | 40/60 |
| d | 8 | 33/67 | 34/66 |
| e | 7 | 30/70 | 34/66 |
| f | 6 | 27/73 | 27/73 |
| g | 5 | 23/77 | 23/77 |
| h + 5 Gew.% Gemisch aus Bernstein-, Glutar-, Adipinsäure | 5,4 | 10/90 | 10/90 |
| i + 10 Gew.% Gemisch aus Bernstein-, Glutar-, Adipinsäure | 5,05 | 2/98 | 2/98 |
| Zeolith A mit höherem Natriumhydroxidanteil (als Verunreinigung) | | | |
| a | 12,6 | 72/28 | 73/27 |
| b | 10 | 63/37 | 63/37 |
| c | 9 | 58/42 | 60/40 |
| d | 8 | 56/44 | 56/44 |
| e | 7 | 54/46 | 54/46 |
| f | 6 | 49/51 | 49/51 |
| g | 5 | 45/55 | 45/55 |
| h + 5 Gew.% Gemisch aus Bernstein-, Glutar-, Adipinsäure | 5,45 | 7/93 | 8/92 |
| i + 10 Gew.% Gemisch aus Bernstein-, Glutar-, Adipinsäure | 5,1 | 2/98 | 2/98 |

Hier zeigt sich, dass bei fallendem pH-Wert zwar eine leichte Verbesserung eintritt, aber erst bei Zusatz der Dicarbonsäuren werden die Suspensionen lagerstabil.

**Patentanspruch**

Lagerstabile, fliessfähige und pumpbare wässrige Suspensionen, bestehend aus – bezogen auf das Gewicht der Suspension – 20 bis 60% an feinverteilten wasserunlöslichen Natriumaluminiumsilikaten, zusätzlich als Stabilisierhilfsmittel und Fliessfähigkeitsverbesserer organischen Säuren und/oder deren Salze und Wasser, dadurch gekennzeichnet, dass die organischen Säuren bzw. deren Salze in den Suspensionen in einer Menge von 0,5 bis 15% – bezogen auf das Gewicht der Suspension – zugegen sind und ausschliesslich aus mindestens einer hydroxylgruppenfreien gesättigten oder ungesättigten aliphatischen Dicarbonsäure mit 3 bis 10 C-Atomen oder ihren Alkalisalzen bestehen.

**Claim**

A storage-stable, flowable and pumpable aqueous suspension which contains, based on the weight of the suspension, from 20 to 60% of finely divided, water-insoluble sodium aluminum silicates as well as an organic acid and/or a salt thereof as a stabilizer and flow improver, and water, characterized in that the suspension contains as organic acid or salt thereof exclusively at least one hydroxyl-free saturated or unsaturated aliphatic dicarboxylic acid of 3 to 10 carbon atoms or an alkali metal salt thereof in an amount of from 0.5 to 15%, based on the weight of the suspension.

**Revendication**

Suspensions aqueuses fluides et pompables, stables au stockage, contenant entre 20 et 60% de leur poids d'alumino-silicates de sodium insolubles dans l'eau finement dispersés, ainsi que de l'eau et des acides organiques et (ou) des sels d'acides organiques destinés à accroître la stabilité et à améliorer la fluidité, caractérisées en ce que les acides organiques ou les sels d'acides organiques sont présents dans les suspensions en une proportion de 0,5 à 15% du poids de celles-ci et sont formés exclusivement d'au moins un acide dicarboxylique aliphatique, saturé ou non, en $C_3$ à $C_{10}$, exempt de groupes oxhydryle, ou de sels de métaux alcalins d'un tel acide.